# EUROPÄISCHE PATENTANMELDUNG

(11) **EP 4 664 927 A1**
(43) Veröffentlichungstag der Anmeldung: **17.12.2025**
(21) Anmeldenummer: 25174617.8
(22) Anmeldetag: 06.05.2025
(51) Int. Cl.: H04R 5/04, G10H 1/36, H04R 3/12

(54) **KARAOKEMODUL ZUR VERWENDUNG IN EINEM FAHRZEUG SOWIE FAHRZEUG MIT EINEM KARAOKEMODUL**

(30) Priorität: 14.06.2024 DE 102024116775
(71) Anmelder: AUDI AG, 85057 Ingolstadt (DE)
(72) Erfinder: Hélot, Jacques, 85051 Ingolstadt (DE); Wall, Christian, 85122 Hitzhofen (DE)

(57) **Zusammenfassung**

Tragbares Karaokemodul (10, 20) zur Verwendung in einem Fahrzeug (30) mit einem fahrzeugintegrierten Audiosystem (31, 32), wobei das tragbare Karaokemodul (10, 20) wenigstens ein Mikrofon (11) und ein Gehäuse (12) aufweist, in dem wenigstens ein Lautsprecher (13), eine elektronische Steuereinheit (14) zur wahlweisen Ausgabe von Audiosignalen über den Lautsprecher (13) und ein wiederaufladbarer Energiespeicher (15) zur Energieversorgung des Lautsprechers (13) und der Steuereinheit (14) aufgenommen sind, wobei an einer Außenseite des Gehäuses (12) eine Bedieneinheit (16) zur manuellen Funktionssteuerung und wenigstens eine Mikrofonaufnahme (17) zur mechanischen Aufnahme des Mikrofons (11) bereitgestellt sind, wobei das Gehäuse (12) ausgebildet ist, in eine korrespondierende Modulaufnahme (33) im Fahrzeug (30) aufgenommen zu werden, und die Steuereinheit (14) ausgebildet ist, die Audiosignale über den Lautsprecher (13) auszugeben, wenn das Gehäuse (12) nicht in der Modulaufnahme (33) aufgenommen ist, und andernfalls die Audiosignale automatisch über das Audiosystem (31, 32) des Fahrzeugs (30) auszugeben; ferner ein Fahrzeug (30) mit einem tragbaren Karaokemodul (10, 20).

## Beschreibung

Die Erfindung betrifft ein Karaokemodul zur Verwendung in einem Fahrzeug sowie ein Fahrzeug mit einem Karaokemodul.

Karaoke ist eine allgemein bekannte Freizeitbeschäftigung, bei der Personen zu einem Instrumental-Playback bekannter Musikstücke live in ein Mikrofon singen. Das Instrumental-Playback und die vom Mikrofon aufgenommenen Signale können vom Karaokemodul gemischt und gemeinsam über einen Lautsprecher ausgegeben werden.

In Fahrzeugen sind verschiedene Ablagemöglichkeiten für zusätzliche externe Komponenten bekannt. Sowohl die Ablagen als auch die Komponenten sind meist in Form und Größe unterschiedlich. Zum Beispiel werden Karaokemikrofone zum Einsatz in Fahrzeugen angeboten. Diese werden mit dem Fahrzeug über Bluetooth gekoppelt und werden über die Fahrzeuglautsprecher ausgegeben.

Die Mikrofone haben häufig keine eigene Verstaumöglichkeit und können außerhalb des Fahrzeugs nicht eigenständig benutzt werden.

Aus GB 2484084 A ist beispielsweise eine tragbare Karaokevorrichtung mit Mikrofonen, Musikwiedergabe und Steuereinheit bekannt. Die Karaokevorrichtung kann mit einem Audiosystem eines Fahrzeugs gekoppelt werden.

Weiterhin beschreibt DE 3513017 A1 ein Fahrzeugaudiosystem mit einem Karaokegerät, von dem ein Steuerteil und ein Anzeigeteil in einer Mittelkonsole oder einem Armaturenbrett des Fahrzeugs angeordnet sind und andere Teile an davon abgesetzten, verdeckten Plätzen angeordnet sind.

CN 201261432 Y offenbart eine externe Karaokevorrichtung für ein Fahrzeug. Die externe Karaokevorrichtung kann in verschiedenen Bereichen des Fahrzeugs montiert werden.

Vor diesem Hintergrund liegt der Erfindung die Aufgabe zugrunde, ein Karaokemodul zur Verwendung in einem Fahrzeug sowie ein Fahrzeug mit einem Karaokemodul bereitzustellen, die die vorgenannten Karaokefunktionen mit einem geringeren baulichen Aufwand und kostengünstig bereitstellen können.

Diese Aufgabe wird durch ein Karaokemodul mit den Merkmalen des Anspruchs 1 sowie durch ein Fahrzeug mit den Merkmalen des Anspruchs 8 gelöst. Weitere besonders vorteilhafte Ausgestaltungen der Erfindung offenbaren die jeweiligen Unteransprüche.

Es sei angemerkt, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner angemerkt, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Gegenstand der Erfindung ist ein tragbares Karaokemodul zur Verwendung in einem Fahrzeug, das ein fahrzeugintegriertes Audiosystem (d. h. wenigstens einen Fahrzeuglautsprecher sowie eine Fahrzeugsteuereinheit zur wahlweisen Ausgabe von Audiosignalen über den Fahrzeuglautsprecher) aufweist, wobei das tragbare Karaokemodul wenigstens ein Mikrofon und ein Gehäuse aufweist, in dem wenigstens ein Lautsprecher, eine elektronische Steuereinheit zur wahlweisen Ausgabe von Audiosignalen, wie z. B. einem Musikstück, einem Instrumental-Playback und/oder von dem Mikrofon aufgenommenen Signalen über den Lautsprecher (ggfs. unter Zwischenschaltung eines Verstärkers zur Verstärkung der auszugebenden Audiosignale) und ein wiederaufladbarer Energiespeicher zur Energieversorgung des Lautsprechers und der Steuereinheit aufgenommen sind. Ferner sind an einer Außenseite des Gehäuses eine Bedieneinheit zur manuellen Funktionssteuerung des Karaokemoduls und wenigstens eine Mikrofonaufnahme zur mechanischen Aufnahme des Mikrofons bereitgestellt. Erfindungsgemäß ist das Gehäuse ausgebildet, in eine korrespondierende Modulaufnahme im Fahrzeug aufgenommen zu werden, und die Steuereinheit ist ausgebildet, die Audiosignale über den Lautsprecher auszugeben, wenn das Gehäuse nicht in der Modulaufnahme des Fahrzeugs aufgenommen ist, und andernfalls die Audiosignale automatisch über das Audiosystem des Fahrzeugs (z. B. den Fahrzeuglautsprecher) auszugeben.

Wird das Karaokemodul in die Modulaufnahme des Fahrzeugs geschoben, beginnt das Karaokemodul sich automatisch mit dem Fahrzeug bzw. mit einer Fahrzeugsteuereinheit zu koppeln. Die Funktionalität des Lautsprechers des Karaokemoduls wird dabei deaktiviert. Bei Anordnung im Fahrzeug ist das gesamte Karaokemodul (d. h. einschließlich des wenigstens einen Mikrofons) stets sicher und mit minimalem baulichen Aufwand sowie platzsparend im Fahrzeug gehalten. Zusätzlich ist es ausgebildet, auch außerhalb des Fahrzeugs die volle Funktionalität zu besitzen und unabhängig von diesem bestimmungsgemäß genutzt werden zu können.

In einer vorteilhaften Ausführungsform weist die Mikrofonaufnahme einen Push-Push-Verriegelungsmechanismus zur Aufnahme des Mikrofons auf. Das heißt, zum Herausnehmen des Mikrofons aus der Mikrofonaufnahme wird das Mikrofon ein kurzes Stück über die verriegelte Stellung hinweg in Verriegelungsrichtung bewegt. Diese kurze Bewegung in Verriegelungsrichtung über die verriegelte Stellung hinaus, in welcher das Mikrofon in der Aufnahme sicher gehalten ist, gibt die Verriegelung frei. Der Push-Push-Verriegelungsmechanismus ist entriegelt und das Mikrofon kann aus der Aufnahme herausgenommen werden oder federbetätigt wenigstens teilweise ausfahren.

In anderen bevorzugten Ausführungsformen ist die Mikrofonaufnahme als Hohlzylinder ausgebildet. Dieser weist eine Höhe auf, die im Wesentlichen der Länge des Mikrofons entspricht. Das heißt, das Mikrofon schließt bei vollständiger Aufnahme in der Mikrofonaufnahme bündig mit dem Gehäuse (z. B. einer Oberseite) ab. Neben einer besonders platzsparenden Anordnung vermeidet diese Ausgestaltung ein von einem andernfalls teilweise freiliegenden oder aus dem Gehäuse hervorstehenden Mikrofon ein gegebenenfalls ausgehendes Verletzungsrisiko bei Anordnung im Fahrzeug.

Der Hohlzylinder weist vorzugsweise einen Durchmesser auf, der nur unwesentlich größer ist als ein Durchmesser des Mikrofons, so dass dieses sicher und ohne Kippeln in der Mikrofonaufnahme gehalten ist.

In weiteren vorteilhaften Ausführungsformen weist das Karaokemodul eine mit der Steuereinheit gekoppelte Detektiervorrichtung (z. B. einen mechanischen Schalter, Hall-Sensor, RFID, Nahfeldkommunikation (NFC) o. ä.) auf, die ausgebildet ist, die Aufnahme bzw. das Einschieben des Gehäuses in die Modulaufnahme des Fahrzeugs festzustellen und der Steuereinheit die festgestellte Aufnahme zu signalisieren. In dem Fall kann die Steuereinheit des Karaokemoduls automatisch die Ausgabe der Audiosignale über das Audiosystem, d. h. einen Fahrzeuglautsprecher, starten.

Alternativ oder zusätzlich kann das Fahrzeug eine Detektiervorrichtung mit derselben Funktion aufweisen, so dass vom Fahrzeug automatisch eine Kopplung des Audiosystems mit dem in die Modulaufnahme eingeschobenen tragbaren Karaokemodul initiiert werden kann.

Gemäß einer anderen vorteilhaften Ausführungsform weist das Karaokemodul eine mit dem wiederaufladbaren Energiespeicher gekoppelte Energieübertragungsvorrichtung auf, die ausgebildet ist, bei Aufnahme des Gehäuses in die Modulaufnahme des Fahrzeugs vom Fahrzeug bereitgestellte elektrische Energie in den wiederaufladbaren Energiespeicher zu übertragen und diesen zu laden. Bei der Energieübertragungsvorrichtung kann es sich beispielsweise um eine kontaktbehaftete elektrische Verbindung handeln oder um eine Übertragungsvorrichtung, die eine drahtlose, z. B. induktive, Energieübertragung bereitstellt.

Bei weiteren bevorzugten Ausführungsformen ist an der Außenseite des Gehäuses eine Geräteaufnahme für ein mobiles Endgerät (z. B. Smartphone, Tablet, Laptop o. ä.) bereitgestellt. Neben einer sicheren und platzsparenden Unterbringung des mobilen Endgeräts kann dieses zur Übertragung von Audiosignalen, wie z. B. eines Musikstücks, eines Instrumental-Playbacks und dergleichen, zur Steuereinheit des Karaokemoduls genutzt werden.

Die Bedieneinheit des Karaokemoduls kann ausgebildet sein und genutzt werden, Funktionen des mobilen Endgeräts zu steuern, zum Beispiel wenn sich dieses in der Geräteaufnahme befindet.

Bei vorteilhaften anderen Ausführungsformen ist die Steuereinheit ausgebildet, ein Entnehmen des Mikrofons aus der Mikrofonaufnahme zu detektieren und in diesem Fall die Ausgabe der Audiosignale über den karaokemodulseitigen Lautsprecher und/oder das Audiosystem des Fahrzeugs zu starten. Wird das wenigstens eine Mikrofon aus dem Karaokemodul entnommen, kann beispielsweise im Fahrzeug auf einem Display automatisch ein Karaokemenü angezeigt werden, mit dem ein Fahrzeuginsasse Karaokefunktionen des Karaokemoduls steuern kann.

Des Weiteren ist Gegenstand der Erfindung ein Fahrzeug, das ein integriertes Audiosystem aufweist, das wiederum wenigstens einen Fahrzeuglautsprecher und eine Fahrzeugsteuereinheit zur Ausgabe von Audiosignalen über den Fahrzeuglautsprecher aufweist. Weiterhin weist das Fahrzeug eine Modulaufnahme auf, die ausgebildet ist, ein tragbares Karaokemodul nach einer der hierin offenbarten Ausführungsformen aufzunehmen. Das tragbare Karaokemodul wird sicher im Fahrzeug positioniert. Außerdem erfolgt eine automatische Kopplung des Karaokemoduls mit dem Audiosystem des Fahrzeugs, wenn das Karaokemodul in die Modulaufnahme eingeschoben ist.

Es ist zu verstehen, dass bezüglich fahrzeugbezogener Begriffsdefinitionen sowie der Wirkungen und Vorteile fahrzeuggemäßer Merkmale vollumfänglich auf die Offenbarung sinngemäßer Definitionen, Wirkungen und Vorteile des erfindungsgemäßen Karaokemoduls zurückgegriffen werden kann und umgekehrt. Auf eine Wiederholung von Erläuterungen sinngemäß gleicher Merkmale, deren Wirkungen und Vorteile kann somit zugunsten einer kompakteren Beschreibung verzichtet werden, ohne dass derartige Auslassungen als Einschränkung für einen der offenbarten Erfindungsgegenstände auszulegen wären.

In einer bevorzugten Ausführungsform ist die Modulaufnahme in einer Mittelkonsole des Fahrzeugs angeordnet. Dies ermöglicht eine gute Erreichbarkeit des Karaokemoduls (beispielsweise zur Bedienung über die karaokemodulseitige Bedieneinheit, zur Entnahme des Mikrofons etc.) von verschiedenen Sitzplätzen (z. B. Fahrer-, Beifahrersitz, Rückbank) im Fahrzeug aus.

In einer anderen vorteilhaften Ausführungsform ist die Modulaufnahme als Ausnehmung (z. B. in der Mittelkonsole) ausgebildet, die eine Einschubtiefe aufweist, die im Wesentlichen einer Höhe des Gehäuses des Karaokemoduls entspricht. Damit kann das tragbare Karaokemodul vollständige in die Modulaufnahme versenkt werden und zum Beispiel bündig mit einer Oberseite der Mittelkonsole abschließen. Neben einem ansprechenden visuellen Eindruck wird ein potentielles Verletzungsrisiko von in einen Fahrzeuginnenraum hineinragenden Komponenten des Karaokemoduls vermieden.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen schematisch:
- Figur 1: ein Funktionsdiagramm eines tragbaren Karaokemoduls nach einer Ausführungsform der Erfindung;
- Figur 2: eine perspektivische Ansicht eines tragbaren Karaokemoduls nach einer weiteren Ausführungsform der Erfindung;
- Figur 3: eine Draufsicht auf einen Bereich eines Innenraums eines Fahrzeugs nach einer Ausführungsform der Erfindung bei Verwendung des Karaokemoduls aus Figur 2 gemäß einer ersten Möglichkeit;
- Figur 4: eine Draufsicht auf den Bereich des Innenraums des Fahrzeugs aus Figur 3 bei Verwendung des Karaokemoduls aus Figur 2 gemäß einer zweiten Möglichkeit; und
- Figur 5: eine Draufsicht auf den Bereich des Innenraums des Fahrzeugs aus Figur 4 während der Verwendung des Karaokemoduls aus Figur 2 gemäß der zweiten Möglichkeit.

In den unterschiedlichen Figuren sind hinsichtlich ihrer Funktion gleichwertige Teile stets mit denselben Bezugszeichen versehen, so dass diese in der Regel auch nur einmal beschrieben werden.

Die nachfolgend beschriebenen konkreten Ausführungsbeispiele haben rein exemplarischen Charakter zur Verdeutlichung der grundsätzlichen Strukturen und Abläufe.

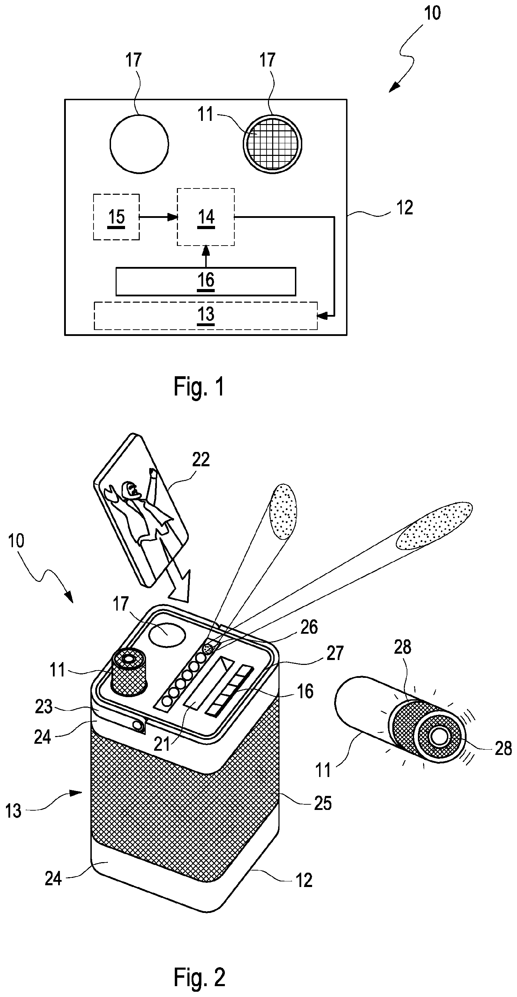

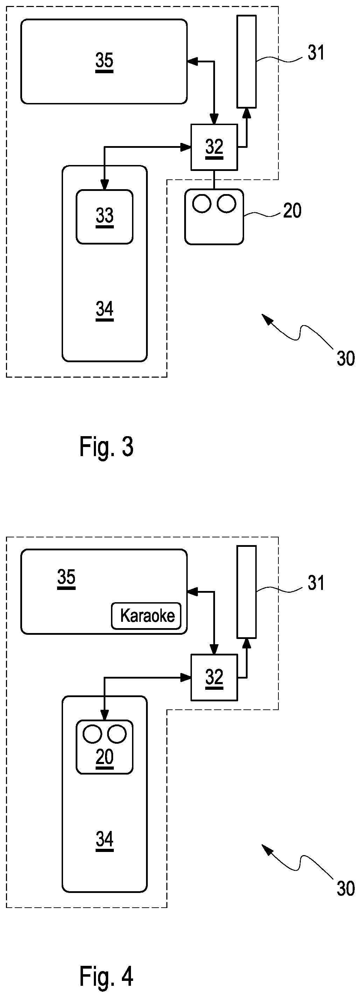

Figur 1 stellt ein Funktionsdiagramm eines tragbaren Karaokemoduls 10 nach einer Ausführungsform der Erfindung dar. Das Karaokemodul 10 ist ausgebildet, sowohl autark, d. h. unabhängig von einem Fahrzeug (vgl. Figur 3), als auch in einem Fahrzeug (vgl. Figuren 4 u. 5) verwendet zu werden, wie nachstehend näher erläutert wird.

Das in Figur 1 gezeigte tragbare Karaokemodul 10 weist wenigstens ein Mikrofon 11, bevorzugt zwei Mikrofone 11, von denen in Figur 1 lediglich eines dargestellt ist, und ein Gehäuse 12 auf. In dem Gehäuse 12 sind vorliegend ein Lautsprecher 13, eine elektronische Steuereinheit 14 zur wahlweisen Ausgabe von Audiosignalen über den Lautsprecher 13 und ein wiederaufladbarer Energiespeicher 15 zur Energieversorgung des Lautsprechers 13 und der Steuereinheit 14 aufgenommen. An einer Außenseite des Gehäuses 12 sind eine Bedieneinheit 16 zur manuellen Funktionssteuerung des Karaokemoduls 10 und vorliegend zwei Mikrofonaufnahmen 17 zur mechanischen Aufnahme des Mikrofons 11 bereitgestellt. Die Bedieneinheit 16 kann mehrere Bedienelemente, zum Beispiel Taster, Schalter, Drehknöpfe und dergleichen, aufweisen.

Die Mikrofonaufnahme 17 weist bevorzugt, jedoch ohne zwingende Beschränkung hierauf, einen Push-Push-Verriegelungsmechanismus zur Aufnahme des Mikrofons 11 auf.

Die Mikrofonaufnahme 17 ist bei dem in Figur 1 dargestellten Karaokemodul 10 als Hohlzylinder ausgebildet, in welchen das Mikrofon 11 vollständig versenkt werden kann, so dass eine Oberseite des Mikrofons 11 mit einer Oberseite des Gehäuse 10 bündig abschließt, wenn das Mikrofon 11 vollständig in der Mikrofonaufnahme 17 aufgenommen ist.

Figur 2 stellt eine perspektivische Ansicht eines Karaokemoduls 20 nach einer weiteren Ausführungsform der Erfindung dar. Das Karaokemodul 20 unterscheidet sich von dem in Figur 1 dargestellten Karaokemodul 10 im Wesentlichen dadurch, dass es an der Außenseite des Gehäuses 12 eine Geräteaufnahme 21 für ein mobiles Endgerät 22 (vorliegend und ohne zwingende Beschränkung hierauf ein Smartphone) bereitstellt. Das mobile Endgerät 22 kann mit der Steuereinheit 14 des Karaokemoduls 20 in datenübertragender Weise gekoppelt werden, um zum Beispiel ein Musikstück, ein Instrumental-Playback o. ä. an die Steuereinheit 14 zu übertragen, die die zugehörigen Audiosignale über den Lautsprecher 13 ausgibt.

Zusätzlich ist in Figur 2 ein an dem Gehäuse 12 angebrachter Tragegriff 23 zu erkennen. Ferner weist das Karaokemodul 20 beispielhaft und ohne zwingende Beschränkung hierauf eine zwischen einem oberen und einem unteren Metallring 24 (z. B. Aluringe) gehaltene Stoffbespannung 25 auf, die den Lautsprecher 13 bedeckt, so dass er in Figur 2 nicht zu erkennen ist. Auf einer Oberseite des Karaokemoduls 20 sind weiterhin beispielhaft Leuchtelemente 26 in Form einzelner LEDs und ein im Wesentlichen einer Kontur der Gehäuseoberseite folgender Leuchtring 27 angeordnet.

In Figur 2 ist eines der beiden Mikrofone 11, das aus einer der beiden Mikrofonaufnahmen 17 herausgenommen ist, ebenfalls in einer perspektivischen Darstellung gezeigt. Das Mikrofon 11 weist in der vorliegenden Ausführungsform beispielhaft Leuchtelemente 28 auf, die durch entsprechende Lichtzeichen anzeigen können, wann in das Mikrofon 11 zu singen ist. Das Mikrofon 11 kann zusätzlich eine Vibrationen erzeugende Einheit (nicht dargestellt) aufweisen, die beispielsweise anzeigen kann, dass eine Gesangslautstärke zu hoch ist.

Figur 3 stellt eine Draufsicht auf einen Bereich eines Innenraums eines Fahrzeugs 30 nach einer Ausführungsform der Erfindung bei Verwendung des Karaokemoduls 20 aus Figur 2 gemäß einer ersten Möglichkeit dar.

Das Fahrzeug 30 weist ein integriertes Audiosystem auf, das wenigstens einen Fahrzeuglautsprecher 31 und eine Fahrzeugsteuereinheit 32 zur wahlweisen Ausgabe von Audiosignalen über den Fahrzeuglautsprecher 31 aufweist. Des Weiteren weist das Fahrzeug 30 eine Modulaufnahme 33 auf, die ausgebildet ist, ein tragbares Karaokemodul (z. B. das tragbare Karaokemodul 10 oder 20) aufzunehmen. In dem vorliegend dargestellten Ausführungsbeispiel ist die Modulaufnahme 33 in einer Mittelkonsole 34 des Fahrzeugs 30 angeordnet, ohne jedoch zwingend hierauf beschränkt zu sein.

Bevorzugt ist die Modulaufnahme 33 als Ausnehmung in der Mittelkonsole 34 ausgebildet, in die das Karaokemodul 20 vollständig eingeschoben werden kann, so dass die Oberseite des Karaokemoduls 20 bündig mit der Mittelkonsole 34 abschließt, wenn das Karaokemodul 20 vollständig in die Modulaufnahme 33 eingeschoben ist.

Das Gehäuse 12 des tragbaren Karaokemoduls 20 (ebenso wie das Gehäuse 12 des in Figur 1 dargestellten Karaokemoduls 10) ist ausgebildet, in die korrespondierende Modulaufnahme 33 aufgenommen zu werden. Ferner ist die Steuereinheit 14 des Karaokemoduls 20 (ebenso die des Karaokemoduls 10) ausgebildet, die Audiosignale über den karaokemoduleigenen Lautsprecher 13 auszugeben, wenn das Gehäuse 12 nicht in der Modulaufnahme 33 aufgenommen ist, und andernfalls die Audiosignale automatisch über das Audiosystem des Fahrzeugs 30, d. h. über den Fahrzeuglautsprecher 31, auszugeben.

In Figur 3 ist die Situation dargestellt, in welcher das Karaokemodul 20 unabhängig vom Fahrzeug 30, d. h. autark, verwendet werden kann. Die Steuereinheit 14 des Karaokemoduls 20 (ebenso die des Karaokemoduls 10) ist ausgebildet, die Audiosignale über den karaokemodulseitigen Lautsprecher 13 auszugeben, da das Gehäuse 12 des Karaokemoduls 20 nicht in der Modulaufnahme 33 des Fahrzeugs 30 aufgenommen ist.

Figur 4 stellt eine Draufsicht auf den Bereich des Innenraums des Fahrzeugs 30 aus Figur 3 bei Verwendung des Karaokemoduls 20 aus Figur 1 gemäß einer zweiten Möglichkeit dar, in welcher das Karaokemodul 20 in der Modulaufnahme 33 aufgenommen ist. Die Steuereinheit 14 des Karaokemoduls 20 (ebenso die des Karaokemoduls 10) ist ausgebildet, die Audiosignale über den Fahrzeuglautsprecher 31 auszugeben, da das Gehäuse 12 des Karaokemoduls 20 in der Modulaufnahme 33 des Fahrzeugs 30 aufgenommen ist.

Wird das Karaokemodul 20 in die Modulaufnahme 33 geschoben, kann die Steuereinheit 14 automatisch eine Kommunikationsverbindung mit der Fahrzeugsteuereinheit 32 herstellen. Hierzu kann das Karaokemodul 20 eine mit der Steuereinheit 14 gekoppelte Detektiervorrichtung (nicht dargestellt) aufweisen, die ausgebildet ist, die Aufnahme des Gehäuses 12 in die Modulaufnahme 33 festzustellen und der Steuereinheit 14 die festgestellte Aufnahme zu signalisieren, um die Kopplung des Karaokemoduls 20 mit dem Fahrzeug 30 herzustellen. Alternativ oder zusätzlich kann im Fahrzeug 30 eine funktionsgleiche Detektiervorrichtung vorhanden sein, so dass die Kopplung vom Fahrzeug 30 initiiert werden kann, sobald die fahrzeugseitige Detektiervorrichtung die Aufnahme des Karaokemoduls 20 in die Modulaufnahme 33 feststellt.

Nachdem das Karaokemodul 20 mit dem Fahrzeug 30 bzw. der Fahrzeugsteuereinheit 32 gekoppelt ist, kann dies auf einem Display 35 des Fahrzeugs 30 entsprechend angezeigt werden, wie in Figur 4 mit dem Schriftzug "Karaoke" angedeutet ist.

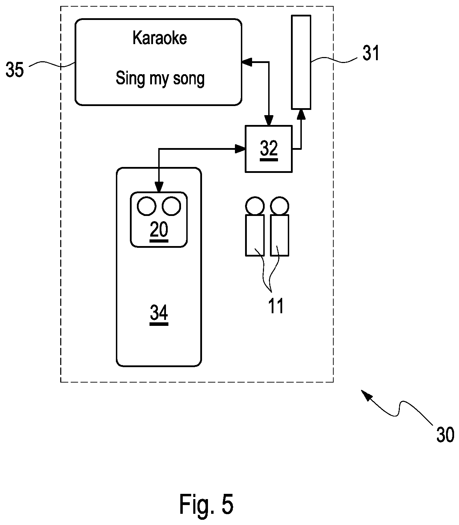

Figur 5 stellt eine Draufsicht auf den Bereich des Innenraums des Fahrzeugs 30 aus Figur 4 während der Verwendung des Karaokemoduls 20 aus Figur 1 gemäß der zweiten Möglichkeit dar, wobei wenigstens eines der Mikrofone 11 aus seiner Mikrofonaufnahme 17 entnommen ist. Die Steuereinheit 14 des Karaokemoduls 20 (ebenso die des Karaokemoduls 10) kann ausgebildet sein, das Entnehmen des Mikrofons 11 aus der Mikrofonaufnahme 17 zu detektieren und in diesem Fall die Ausgabe der Audiosignale über das Audiosystem des Fahrzeugs 30, d. h. über den Fahrzeuglautsprecher 31, zu starten. Diese Betriebsbereitschaft kann auf dem Display 35 durch eine entsprechende Nachricht angezeigt werden, wie in Figur 5 mit dem Schriftzug "Karaoke, Meine Melodie, deine Stimme" angedeutet ist.

In der in Figur 3 dargestellten Verwendungssituation des Karaokemoduls 20 kann die Steuereinheit 14 ausgebildet sein, das Entnehmen des Mikrofons 11 aus der Mikrofonaufnahme 17 zu detektieren und in diesem Fall die Ausgabe der Audiosignale über den karaokemodulseitigen Lautsprecher 13 zu starten.

Das Karaokemodul 20 kann eine mit dem wiederaufladbaren Energiespeicher 15 gekoppelte Energieübertragungsvorrichtung (nicht dargestellt) aufweisen, die ausgebildet ist, bei Aufnahme des Gehäuses 12 in die Modulaufnahme 33 des Fahrzeugs 30 vom Fahrzeug 30 bereitgestellte elektrische Energie in den wiederaufladbaren Energiespeicher 15 zu übertragen und diesen zu laden.

### BEZUGSZEICHENLISTE:

- 10: Tragbares Karaokemodul
- 11: Mikrofon
- 12: Gehäuse
- 13: Lautsprecher
- 14: Steuereinheit
- 15: Wiederaufladbarer Energiespeicher
- 16: Bedieneinheit
- 17: Mikrofonaufnahme

- 20: Tragbares Karaokemodul
- 21: Geräteaufnahme
- 22: Mobiles Endgerät
- 23: Tragegriff
- 24: Metallring
- 25: Stoffbespannung
- 26: Leuchtelement
- 27: Leuchtring
- 28: Leuchtelement

- 30: Fahrzeug
- 31: Audiosystem: Fahrzeuglautsprecher
- 32: Audiosystem: Fahrzeugsteuereinheit
- 33: Modulaufnahme
- 34: Mittelkonsole
- 35: Display

## Patentansprüche

1. Tragbares Karaokemodul (10, 20) zur Verwendung in einem Fahrzeug (30) mit einem fahrzeugintegrierten Audiosystem (31, 32), wobei das tragbare Karaokemodul (10, 20) wenigstens ein Mikrofon (11) und ein Gehäuse (12) aufweist, in dem wenigstens ein Lautsprecher (13), eine elektronische Steuereinheit (14) zur wahlweisen Ausgabe von Audiosignalen über den Lautsprecher (13) und ein wiederaufladbarer Energiespeicher (15) zur Energieversorgung des Lautsprechers (13) und der Steuereinheit (14) aufgenommen sind, wobei an einer Außenseite des Gehäuses (12) eine Bedieneinheit (16) zur manuellen Funktionssteuerung und wenigstens eine Mikrofonaufnahme (17) zur mechanischen Aufnahme des Mikrofons (11) bereitgestellt sind, wobei das Gehäuse (12) ausgebildet ist, in eine korrespondierende Modulaufnahme (33) im Fahrzeug (30) aufgenommen zu werden, und die Steuereinheit (14) ausgebildet ist, die Audiosignale über den Lautsprecher (13) auszugeben, wenn das Gehäuse (12) nicht in der Modulaufnahme (33) aufgenommen ist, und andernfalls die Audiosignale automatisch über das Audiosystem (31, 32) des Fahrzeugs (30) auszugeben.

2. Karaokemodul nach Anspruch 1, bei dem die Mikrofonaufnahme (17) einen Push-Push-Verriegelungsmechanismus zur Aufnahme des Mikrofons (11) aufweist.

3. Karaokemodul nach Anspruch 1 oder 2, bei dem die Mikrofonaufnahme (17) als Hohlzylinder ausgebildet ist, der eine Höhe aufweist, die der Länge des Mikrofons (11) entspricht.

4. Karaokemodul nach einem der vorhergehenden Ansprüche, welches eine mit der Steuereinheit (14) gekoppelte Detektiervorrichtung aufweist, die ausgebildet ist, die Aufnahme des Gehäuses (12) in die Modulaufnahme (33) des Fahrzeugs (30) festzustellen und der Steuereinheit (14) die festgestellte Aufnahme zu signalisieren.

5. Karaokemodul nach einem der vorhergehenden Ansprüche, welches eine mit dem wiederaufladbaren Energiespeicher (15) gekoppelte Energieübertragungsvorrichtung aufweist, die ausgebildet ist, bei Aufnahme des Gehäuses (12) in die Modulaufnahme (33) des Fahrzeugs (30) vom Fahrzeug (30) bereitgestellte elektrische Energie in den wiederaufladbaren Energiespeicher (15) zu übertragen und diesen zu laden.

6. Karaokemodul nach einem der vorhergehenden Ansprüche, bei dem an der Außenseite des Gehäuses (12) eine Geräteaufnahme (21) für ein mobiles Endgerät (22) bereitgestellt ist.

7. Karaokemodul nach einem der vorhergehenden Ansprüche, bei dem die Steuereinheit (14) ausgebildet ist, ein Entnehmen des Mikrofons (11) aus der Mikrofonaufnahme (17) zu detektieren und in diesem Fall die Ausgabe der Audiosignale über den Lautsprecher (13) und/oder das Audiosystem (31, 32) des Fahrzeugs (30) zu starten.

8. Fahrzeug (30), aufweisend ein integriertes Audiosystem (31, 32), das wenigstens einen Fahrzeuglautsprecher (31) und eine Fahrzeugsteuereinheit (32) zur wahlweisen Ausgabe von Audiosignalen über den Fahrzeuglautsprecher (31) aufweist, und eine Modulaufnahme (33), die ausgebildet ist, ein tragbares Karaokemodul (10, 20) nach einem der vorhergehenden Ansprüche aufzunehmen.

9. Fahrzeug nach Anspruch 8, bei dem die Modulaufnahme (33) in einer Mittelkonsole (34) angeordnet ist.

10. Fahrzeug nach Anspruch 8 oder 9, bei dem die Modulaufnahme (33) als Ausnehmung ausgebildet ist, die eine Einschubtiefe aufweist, die einer Höhe des Gehäuses (12) des Karaokemoduls (10, 20) entspricht.
